# DEMANDE DE BREVET EUROPEEN

(11) **EP 1 808 470 A1**
(43) Date de publication de la demande: **18.07.2007**
(21) Numéro de dépôt: 06125481.9
(22) Date de dépôt: 06.12.2006
(51) Int. Cl.: C09J 125/06, C09J 123/04, C09J 151/06, B32B 27/06

(54) **Liant à base de polyéthylène greffé et de polystyrène choc ou cristal à rupture cohésive**

(30) Priorité: 16.01.2006 FR 0600364
(71) Demandeur: Arkema France, 92800 Puteaux (FR)
(72) Inventeur: GERBAULET, Arnaud, 27000, EVREUX (FR); CHOPINEZ, Fabrice, 27000, EVREUX (FR); BOUILLOUX, Alain, 27300, SAINT-LEGER DE ROTES (FR)
(74) Mandataire: Mouttet, Marie-Paule

(57) **Abrégé**

L'invention concerne un liant comprenant un mélange de polyéthylène (abrégé PE) greffé, de polystyrène (abrégé PS) choc ou cristal, greffé ou non greffé, et éventuellement du PE non greffé. De préférence, le PE greffé est composé de deux PE différents cogreffés. Ce liant est utile pour fabriquer des structures multicouches destinées au domaine du Bâtiment Travaux Publics (BTP), plus particulièrement au domaines des panneaux d'aluminium, des tubes multicouches, mais aussi au domaine de l'emballage.

## Description

L'invention concerne un liant comprenant un mélange de polyéthylène (abrégé PE) greffé, de polystyrène (abrégé PS) choc ou cristal greffé ou non greffé et éventuellement du PE non greffé. De préférence, le PE greffé est composé de deux PE différents cogreffés. Ce liant est utile pour fabriquer des structures multicouches destinées au domaine du Bâtiment Travaux Publics (BTP), plus particulièrement au domaines des panneaux d'aluminium, des tubes multicouches, mais aussi au domaine de l'emballage.

Le document US-6,855,432 est relatif à une composition consistant essentiellement de :
a) 20 à 60 parties en poids de polyéthylène;
b) 10 à 30 parties en poids de polyéthylène greffé d'anhydride maléique;
c) 10 à 25 parties en poids de polystyrène choc (abrégé HI PS) ; et
d) 10 à 25 parties en poids d'éthylène-propylène diène (abrégé EPDM).

Ce liant est utilisé dans des structures multicouches pour lier une couche de substrat métallique à une couche de polymère.

Le document EP1400566 est relatif à un liant de coextrusion comprenant:
a) 10 à 35% en poids d'un polymère (A) lui-même constitué d'un mélange de PE (de 80 à 20% en poids de PE obtenu par catalyse métallocène (A1) et de 20 à 80% en poids d'un polyéthylène LLDPE (A2) non métallocène, le mélange (A1) et (A2) étant cogreffé par un monomère de greffage) ;
b) 40 à 60% en poids d'un copolymère bloc SBS;
c) 20 à 35% en poids de LLDPE ou de PE obtenu par catalyse métallocène.

Le problème technique consiste à bénéficier d'un liant qui dans des structures multicouches est stable dans le temps après vieillissement dans l'eau, présentant des forces de pelage élevées et à rupture cohésive. L'invention permet de répondre à ce problème technique.

Le liant selon l'invention comprend à l'exclusion d'un élastomère:
- de 10 à 79%, avantageusement de 15% à 70%, voir plus avantageusement de 10% à 60%en poids par rapport au poids total de liant, d'un PE (A) ou d'un mélange d'au moins deux PE, PE(A1) et PE(A2), ledit mélange comprenant pour sa part de 95 à 5% en poids de PE (A1) par rapport au poids de PE(A1)+PE(A2) et de 5 à 95% en poids de PEA2) par rapport au poids de PE(A1)+PE(A2), sachant que PE(A1) est différent de PE(A2) et que PE(A) est greffé ou que le mélange PE(A1) + PE(A2) est greffé ou cogreffé,;
- de 21 à 50% en poids par rapport au poids total de liant, d'un PS (B) choc, greffé ou non greffé, ou d'un PS(B) cristal, greffé ou non greffé, avantageusement de 21à 30%, voir plus avantageusement de 25 à 30% ;
- de 0 à 70% un PE (C) non greffé, avantageusement de 0 à 60%. sachant que le PE (A), ou le mélange de PE(A1) + PE(A2) et éventuellement le PS (B) sont soit chacun greffés séparément ou alors sont cogreffés tous ensemble lors d'une même étape de greffage et que PE(A) est différent de PE(C).

L'invention a pour objet un liant comprenant à l'exclusion d'un élastomère, (% en poids total dudit liant) :
- 10-79% d'un PE (A) qui est un VLDPE de densité comprise entre 0,870 et 0,910 g/cm3 ou un mélange d'au moins deux polyéthylènes, PE (A1) et PE(A2), sachant :
   o que PE (A2), qui est un VLDPE de densité comprise entre 0,870 et 0,910 g/cm3, est différent de PE (A1),
   o que PE (A) est greffé ou que le mélange PE (A1) et (A2) est greffé ou cogreffé,
   o que PE(A), PE(A1) ou PE(A2) sont choisis parmi les PE homopolymères et copolymères avec, dans ce cas, au moins 51% d'éthylène et comme comonomère une alpha oléfine choisi parmi le propylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène, le 1-triacontène et leurs mélange,
- 21-50% d'un PS (B), choc, greffé ou non greffé, ou d'un PS (B) cristal, greffé ou non greffé.
- 0 à 70% d'un PE(C) non greffé obtenu par catalyse Ziegler Natta.

Selon un mode de réalisation, le liant est caractérisé en ce qu'il comprend:
- 15-70% d'un PE (A) ou d'un mélange d'au moins deux polyéthylènes, PE (A1) et PE(A2),
- 21-30% d'un PS (B), choc ou cristal, greffé ou non greffé,
- 0 à 60% d'un PE(C) non greffé obtenu par catalyse Ziegler Natta.

Selon un mode de réalisation, le liant est caractérisé en ce que le PE (A1) est choisi parmi du LLDPE, du LDPE et du PEm.

Selon un mode de réalisation, le liant est caractérisé en ce que le PE (C) est un LLDPE de densité comprise entre 0,910 et 0,935 g/cm3.

Selon un mode de réalisation, le liant est caractérisé en ce que les polymères greffés sont greffés avec de l'anhydride maléique en tant que monomère de greffage.

Selon un mode de réalisation, le liant est caractérisé en ce que la quantité de monomère de greffage est de 0,01 à 10 % en poids de polymère greffé.

L'invention a aussi pour objet l'utilisation du liant dans des structures multicouches comprenant: couche d'Aluminium/couche de liant/ couche de PE.

Selon un mode de réalisation, l'utilisation est caractérisée en ce que la couche de PE est une couche de LDPE.

Selon un mode de réalisation, l'utilisation est caractérisée en ce que la couche de PE comprend des charges ignifuges.
➢ Le PE(A) est soit un polyéthylène très basse densité (VLDPE), soit un mélange comprenant au moins un VLDPE, PE(A) étant alors dans ce cas un mélange d'au moins deux PE, PE(A1) et PE(A2), mélange dans lequel PE(A2) est un VLDPE et PE(A1) est différent d'un VLDPE. Le VLDPE a une densité comprise entre 0,870 et 0,910 g/cm3.

S'agissant du polyéthylène (A) ou du mélange d'au moins deux PE, PE(A1) et PE(A2), on entend par polyéthylène des homo- ou copolymères sachant que le copolymère de l'éthylène comprend au moins 51% et de préférence 75% (en moles) d'éthylène.

A titre de comonomères, on peut citer les alpha-oléfines, avantageusement celles ayant de 3 à 30 atomes de carbone; à titre d'exemples d'alpha oléfines on peut citer le propylène, le 1-butène, le 1-pentène, le 3méthyl-1-butène, le 1-hexène, le 4méthyl-1-pentène, le 3méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène, et le 1-triacontène. Ces alpha-oléfines peuvent être utilisées seules ou en mélange d'au moins deux.

Sont exclus du polyéthylène (A) ou du mélange d'au moins deux PE, PE(A1) et PE(A2):
- les esters d'acides carboxyliques insaturés tels que par exemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle,
- les esters vinyliques d'acides carboxyliques saturés tels que par exemple l'acétate ou le propionate de vinyle.
- les diènes tels que par exemple le 1,4-hexadiène.

Le MFI (indice de viscosité à 190°C, 2,16 kg) du polyéthylène (A) ou du mélange d'au moins deux PE, PE(A1) et PE(A2), est compris avantageusement entre 0,1 et 1000 g/10 min.

A titre d'exemple de polyéthylènes PE(A1), on peut citer:
- le polyéthylène basse densité (LDPE) ;
- le polyéthylène linéaire basse densité (LLDPE) ;
- le polyéthylène obtenu par catalyse métallocène (PEm), c'est-à-dire les polymères obtenus par copolymérisation d'éthylène et d'alphaoléfine telle que propylène, butène, héxène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.

De préférence, (A) est un mélange de PE (A1) et de PE (A2), PE (A1) étant différent de PE (A2).

Il s'agit d'un mélange de PE(A1) de densité comprise entre 0,910 et 0,935 g/cm3 et de PE(A2) de densité comprise entre 0,870 et 0,910 g/cm3. Avantageusement, PE(A1) est un LLDPE et PE(A2) est un VLDPE.
➢ Concernant le polyéthylène (C) non greffé, on entend un polyéthylène homo- ou copolymère obtenu par catalyse Ziegler-Natta. Les PE obtenus par catalyse métallocène sont exclus.

A titre de comonomères, on peut citer :
- les alpha-oléfines, avantageusement celles ayant de 3 à 30 atomes de carbone; à titre d'exemples d'alpha oléfines on peut citer le propylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène, et le 1-triacontène; ces alpha-oléfines peuvent être utilisées seules ou en mélange de deux ou de plus de deux,
- les esters d'acides carboxyliques insaturés tels que par exemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle, les copolymères éthylène/(méth)acrylate d'alkyle pouvant contenir jusqu'à 60% en poids de (méth)acrylate d'alkyle et de préférence de 2 à 40% .
- les esters vinyliques d'acides carboxyliques saturés tels que par exemple l'acétate ou le propionate de vinyle.
- les diènes tels que par exemple le 1,4-hexadiène.
Le polyéthylène peut comprendre plusieurs des comonomères précédents.

Avantageusement le copolymère de l'éthylène comprend au moins 51% et de préférence 75% (en moles) d'éthylène. Sa densité peut être comprise entre 0,86 et 0,98 g/cm³. Son MFI (indice de viscosité à 190°C, 2,16 kg) est compris avantageusement entre 0,1 et 1000 g/10 min.

A titre d'exemple de polyéthylènes, on peut citer :
- le polyéthylène basse densité (LDPE)
- le polyéthylène linéaire basse densité (LLDPE)
- le polyéthylène très basse densité (VLDPE)

De préférence, il s'agit du LLDPE.
➢ Concernant le polystyrène (B), il s'agit d'un polystyrène choc tel que les « high impact » polystyrenes abrégés HIPS ou un polystyrène cristal. Les élastomères styrèniques sont exclus. Les HIPS ont un indice de fluidité mesuré selon ASTM D-1238, condition G (200°C, 5000g) d'environs 0,5 à 12 g/10 min, avantageusement entre 1 et 6 g/10 min, de préférence entre 2 et 4 g/10min et de densité de 1.04 à 1.05 g/cm3.

Ce sont par exemple les PS vendus par Dow sous la référence Styron 457, 484 (PS Choc) ou sous al référence Styron 634 et 637 (PS cristal) ou des PS vendus par Total Petrochemical® sous la référence 8350, 7240, 4241 et 3450 (PS choc) ou sous la référence 1160, 1340 et 1450N (PS cristal).
On ne sortirait pas du cadre de l'invention en utilisant un PS choc préalablement greffé ou cristal préalablement greffé. On pourrait également envisager un cogreffage PE(A1)+ PE(A2)+PS(B) « one pot », c'est à dire un greffage simultané en une seule étape.
➢ Le monomère de greffage est un acide carboxylique insaturé. On ne sortirait pas du cadre de l'invention en utilisant un dérivé fonctionnel de cet acide.

Des exemples d'acides carboxyliques insaturés sont ceux ayant 2 à 20 atomes de carbone tels que les acides acryliques, méthacrylique, maléique, fumarique et itaconique. Les dérivés fonctionnels de ces acides comprennent par exemple les anhydrides, les dérivés esters, les derivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et X-méthylbicyclo(2,2,1)hept-5-ène-2,2-dicarboxylique.

Des exemples d'autres monomères de greffage comprennent des esters alkyliques en C₁-C₈ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N, N-diéthylamide maléique, N-monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide; et des sels métalliques d'acides carboxyliques insaturés tels que acrylate de sodium, méthacrylate de sodium, acrylate de potassium, et méthacrylate de potassium.

On préfère l'anhydride maléique (abrégé MAH).

Divers procédés connus peuvent être utilisés pour greffer un monomère de greffage.

La réaction de greffage est mise en oeuvre dans une extrudeuse mono ou double vis alimentée par des polyoléfines dans une trémie d'alimentation, par exemple sous forme de granulés. Dans une première zone de l'extrudeuse, on procède à la fusion des polyoléfines par chauffage et dans une seconde zone, on introduit les réactifs au sein de la masse fondue des polyoléfines.

Par exemple, le greffage peut être réalisé en chauffant le polymère à greffer à température élevée, de environ 150°C à environ 300°C, en présence ou en l'absence d'un solvant avec ou sans initiateur de radicaux. Des solvants appropriés qui peuvent être utilisés dans cette réaction sont le benzène, toluène, xylène, chlorobenzène, cumène entre autres.

On préfère que la zone d'introduction des réactifs soit suffisamment longue et à une température suffisamment basse pour assurer une bonne dispersion des réactifs et une décomposition thermique de l'initiateur radicalaire la plus faible possible.

La réaction de greffage proprement dite a lieu dans une troisième zone de l'extrudeuse à une température apte à assurer la décomposition totale de l'initiateur radicalaire. Avant la sortie de la masse fondue en tête d'extrudeuse, une zone de dégazage est prévue où les produits de décomposition de l'initiateur et le monomère de greffage qui n'a pas réagi sont dégazés par exemple sous vide.

On récupère les polyoléfines greffées en sortie d'extrudeuse par exemple sous forme de joncs granulés après refroidissement sous air froid.

Le rapport pondéral (greffon)/(polymère greffé) est en général compris entre 0,1 et 5 et de préférence 0,15 à 2,5.

Les initiateurs radicalaires peuvent être choisis parmi les peroxydes, peracides, peresters, peracétals. On les utilise en général à raison de 0,01 % à 0,5 % en masse par rapport aux polyoléfines à greffer. Des initiateurs de radicaux appropriés qui peuvent être utilisés comprennent le t-butyl-hydroperoxyde, cumène-hydroperoxyde, di-iso-propyl-benzène-hydroperoxyde, di-t-butyl-peroxyde, t-butyl-cumyl-peroxyde, dicumyl-peroxyde (DICUP), 1,3-bis-(t-butylperoxy-isopropyl)benzène, acétyl-peroxyde, benzoyl-peroxyde, iso-butyryl-peroxyde, bis-3,5,5-triméthyl-hexanoyl-peroxyde, méthyl-éthyl-cétone-peroxyde, 2,5-diméthyl-2,5-ditertiobutylperoxyhexane (DHBP) et l'α,α'-(ditertiobutylperoxyisopropyl)-benzène (Y1490).

On préfère dissoudre l'initiateur radicalaire dans le monomère de greffage à l'état liquide avant de l'introduire, par exemple au moyen d'une pompe doseuse, dans les polyoléfines à l'état fondu.

La quantité du monomère greffé est déterminée par dosage des fonctions succiniques par spectroscopie IRTF.

Dans le polymère modifié par greffage obtenu de la façon susmentionnée, la quantité du monomère de greffage peut être choisie d'une façon appropriée mais elle est de préférence de 0,01 à 10 % en poids, mieux de 0,5 à 2 % en poids, par rapport au poids de polymère greffé.

L'indice de fluidité (MFI) du polymère thermoplastique greffé est compris entre 0,1 et 15 g/10 min (mesuré à 190°C, sous 2,16 kg), avantageusement entre 0,4 et 5 g/10 min. La température de fusion est comprise entre 80 et 130°C.
➢ Nous allons maintenant exemplifier l'invention. Les compositions d'exemples et de comparatifs sont données dans le **tableau 1**. 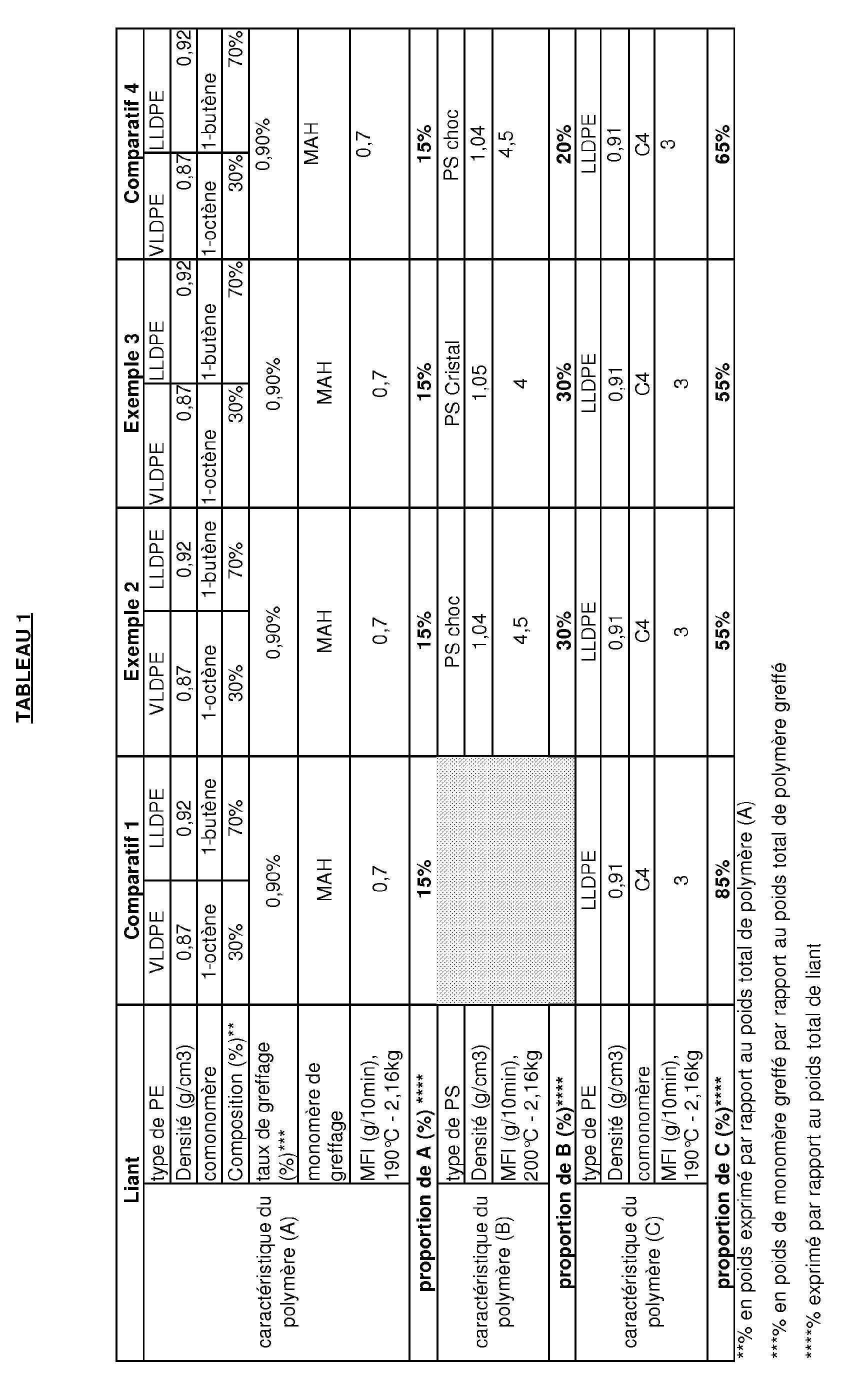 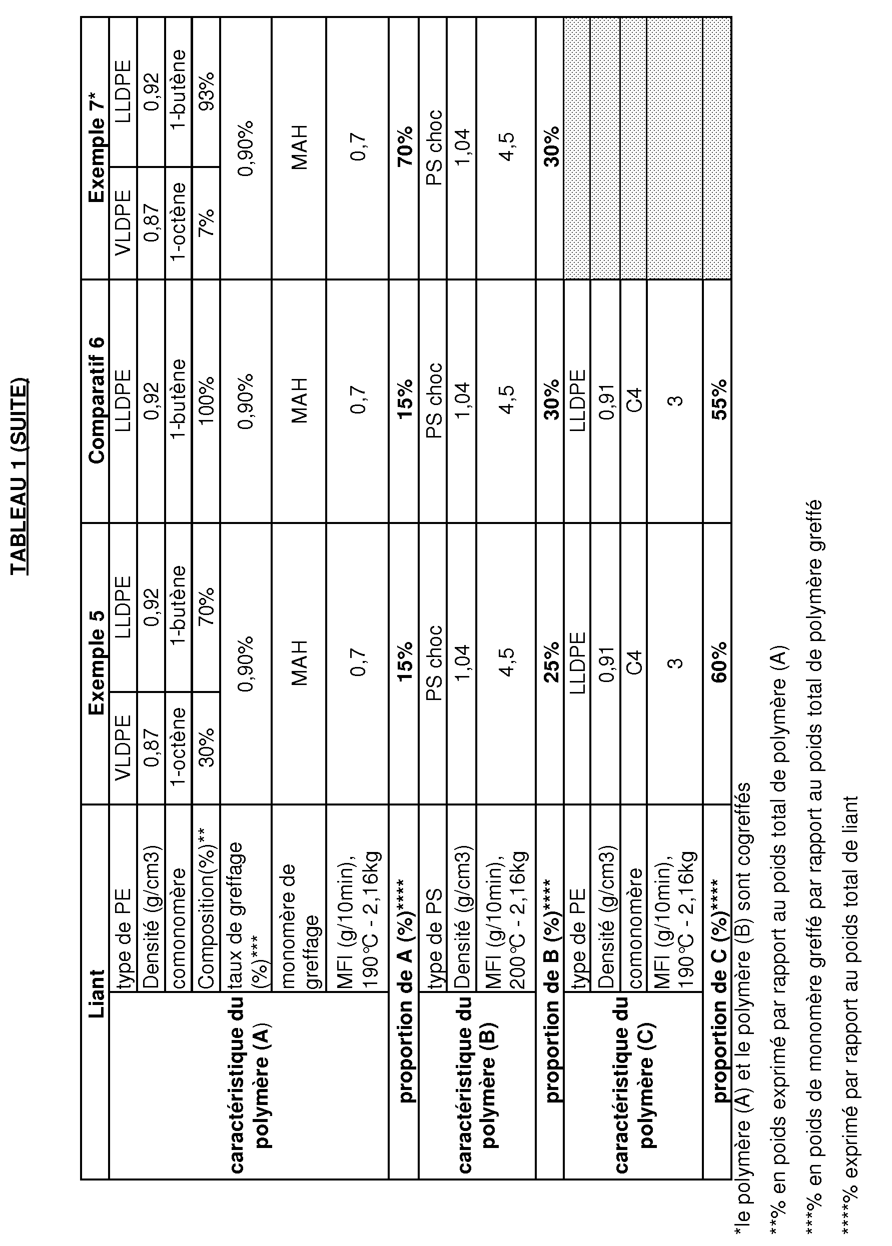
➢ On réalise des échantillons 1 à 7 avec une structure de type Alu (350µm)/liant(35µm)/PE(30µm)/liant (35µm)/Alu (350µm) avec pour liant les compositions Comparatifs/Exemples 1 à 7 pour les Echantillons respectivement 1 à 7 (voir Tableau 1 ci-dessus).Le processus de réalisation des échantillons (abrégé Ech.) 1 à 7 est le suivant :
   1- extrusion d'un film bicouche 35µm de liant et 15µm d'un polyéthylène basse densité (abrégé LDPE) sur une machine de coextrusion de marque collin.
   2- pressage d'une structure Alu (350µm)/liant(35µm)/PE(30µm)/liant (35µm)/Alu (350µm) pendant 5 min sous 3 Mpa à 170°C puis refroidissement à l'air. On se trouve alors au temps t0.
   3- mesure de la force de pelage à un angle de 180° avec une vitesse de traction de 50mm/min.
   4- évaluation du type de rupture définie par R.A pour Rupture Adhésive et par R.C pour Rupture Cohésive.
   5- Résultats annexés dans le **Tableau 2**.

**TABLEAU 2**

| | **Ech. 1** | **Ech. 2** | **Ech. 3** | **Ech. 4** | **Ech.5** | **Ech.6** | **Ech.7** |
|---|---|---|---|---|---|---|---|
| **Force de pelage (N/cm)** | 30 | 70 | 68 | 70 | 65 | 40 | 72 |
| **Type de rupture** | R.A | R.C | R.C | R.A | R.C | R.A | R.C |

➢ Des mesures de force de pelage ont été ensuite faites à t0 défini ci-dessus puis dans différentes conditions indiquées ci-dessous. Elles sont regroupées dans le **tableau 3** suivant.

**TABLEAU 3**

| | **Force de pelage (N/cm)** | | | |
|---|---|---|---|---|
| | **Echantillon 1 (avec comparatif 1)** | **Echantillon 2 (avec exemple 2)** | **Echantillon 5 (avec exemple 5)** | **Echantillon 7 (avec exemple 7)** |
| **t0** | 30 | 70 | 65 | 72 |
| **t0+11jours** | 24 | 76 | 66 | 72 |
| **t0+ 8heures dans de l'eau bouillante** | 15 | 74 | 67 | 74 |
| **t0 + 500 heures dans de l'eau à 23°C** | 17 | 70 | 66 | 75 |

On constate un maintien d'un bon niveau de force de pelage après vieillissement dans de l'eau de la composition de liant selon l'invention.

Cette formulation nous permet d'avoir une adhésion élevée sur aluminium avec un aspect cohésif du pelage, et un maintient des forces de pelage dans le temps et après vieillissement dans l'eau.

## Revendications

1. Liant comprenant à l'exclusion d'un élastomère, (% en poids total dudit liant) :
• De 10 à 79% d'un PE (A) qui est un VLDPE de densité comprise entre 0,870 et 0,910 g/cm3 ou d'un mélange d'au moins deux polyéthylènes, PE (A1) et PE(A2), sachant :
o que PE (A2), qui est un VLDPE de densité comprise entre 0,870 et 0,910 g/cm3, est différent de PE (A1),
o que PE (A) est greffé ou que le mélange PE (A1) et (A2) est greffé ou cogreffé,
o que PE(A), PE(A1) ou PE(A2) sont choisis parmi les PE homopolymères et copolymères avec, dans ce cas, au moins 51% d'éthylène et comme comonomère une alpha oléfine choisi parmi le propylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène, le 1-triacontène et leurs mélange,
• de 21 à 50% d'un PS(B) choc, greffé ou non greffé, ou un PS(B) cristal, greffé ou non greffé"
• de 0 à 70% d'un PE(C) non greffé obtenu par catalyse Ziegler Natta.

2. Liant selon la revendication 1, **caractérisé en ce qu'**il comprend :
• 15-70% d'un PE (A) ou d'un mélange d'au moins deux polyéthylènes, PE (A1) et PE(A2),
• 21-30% d'un PS (B), choc ou cristal, greffé ou non greffé,
• 0 à 60% d'un PE(C) non greffé obtenu par catalyse Ziegler Natta.

3. Liant selon l'une des revendications précédentes, **caractérisé en ce que** le PE (A1) est choisi parmi un LLDPE, un LDPE et un PEm.

4. Liant selon la revendication 3, **caractérisé en ce que** PE(A1) est un LLDPE.

5. Liant selon l'une des revendications 2 à 4, **caractérisé en ce que** le PE (C) est choisi parmi un LDPE, un LLDPE et un VLDPE.

6. Liant selon la revendication 5, **caractérisé en ce que** PE(C) est un LLDPE.

7. Liant selon l'une des revendications précédentes, **caractérisé en ce que** les polymères greffés sont greffés avec un monomère de greffage choisi parmi les acides carboxyliques insaturés ayant de 2 à 20 atomes de carbone et leurs dérivés, les acides dicarboxyliques insaturés ayant de 4 à 10 atomes de carbone et leurs dérivés.

8. Liant selon la revendication 7, **caractérisé en ce que** le monomère de greffage est l'anhydride maléique.

9. Liant selon l'une des revendications 7 ou 8, **caractérisé en ce que** la quantité de monomère de greffage est de 0,01 à 10 % en poids de polymère greffé.

10. Utilisation du liant selon l'une des revendications précédentes dans des structures multicouches comprenant : couche d'Aluminium/couche de liant/ couche de PE.

11. Utilisation selon la revendication 10, **caractérisé en ce que** la couche de PE est une couche de LDPE.

12. Utilisation selon l'une des revendications 10 à 11, **caractérisé en ce que** la couche de PE comprend des charges ignifuges.

## Revendications modifiées

### Revendications modifiées conformément à la règle 86(2) CBE.

**1.** Liant comprenant à l'exclusion d'un élastomère, (% en poids total dudit liant) :
• De 10 à 79% d'un PE (A) qui est un VLDPE de densité comprise entre 0,870 et 0,910 g/cm3 ou d'un mélange d'au moins deux polyéthylènes, PE (A1) et PE(A2), sachant :
o que PE (A2), qui est un VLDPE de densité comprise entre 0,870 et 0,910 g/cm3, est différent de PE (A1),
o que PE (A) est greffé ou que le mélange PE (A1) et (A2) est greffé ou cogreffé,
o que PE(A), PE(A1) ou PE(A2) sont choisis parmi les PE homopolymères et copolymères avec, dans ce cas, au moins 51% d'éthylène et comme comonomère une alpha oléfine choisi parmi le propylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène, le 1-triacontène et leurs mélange,
• de 21 à 50% d'un PS(B) choc, greffé ou non greffé, ou un PS(B) cristal, greffé ou non greffé"
• optionnellement d'un PE(C) non greffé obtenu par catalyse Ziegler Natta.

**2.** Liant selon la revendication 1, **caractérisé en ce qu'**il comprend :
• 15-70% d'un PE (A) ou d'un mélange d'au moins deux polyéthylènes, PE (A1) et PE(A2),
• 21-30% d'un PS (B), choc ou cristal, greffé ou non greffé,
• 0 à 60% d'un PE(C) non greffé obtenu par catalyse Ziegler Natta.

**3.** Liant selon l'une des revendications précédentes, **caractérisé en ce que** le PE (A1) est choisi parmi un LLDPE, un LDPE et un PEm.

**4.** Liant selon la revendication 3, **caractérisé en ce que** PE(A1) est un LLDPE.

**5.** Liant selon l'une des revendications 2 à 4, **caractérisé en ce que** le PE (C) est choisi parmi un LDPE, un LLDPE et un VLDPE.

**6.** Liant selon la revendication 5, **caractérisé en ce que** PE(C) est un LLDPE.

**7.** Liant selon l'une des revendications précédentes, **caractérisé en ce que** les polymères greffés sont greffés avec un monomère de greffage choisi parmi les acides carboxyliques insaturés ayant de 2 à 20 atomes de carbone et leurs dérivés, les acides dicarboxyliques insaturés ayant de 4 à 10 atomes de carbone et leurs dérivés.

**8.** Liant selon la revendication 7, **caractérisé en ce que** le monomère de greffage est l'anhydride maléique.
